# EUROPEAN PATENT SPECIFICATION

(11) **EP 4 250 683 B1**
(45) Date of publication and mention of the grant of the patent: **19.03.2025**
(21) Application number: 21893778.7
(22) Date of filing: 08.11.2021
(51) Int. Cl.: H04L 41/08, H04L 41/22, H04L 67/125, H04L 67/303

(54) **METHOD AND APPARATUS FOR REQUESTING CONFIGURATION PAGE**
VERFAHREN UND VORRICHTUNG ZUR ANFORDERUNG EINER KONFIGURATIONSSEITE
PROCÉDÉ ET APPAREIL DE DEMANDE DE PAGE DE CONFIGURATION

(30) Priority: 20.11.2020 CN 202011311721
(43) Date of publication of application: 27.09.2023
(73) Proprietor: Hangzhou Hikvision Digital Technology Co., Ltd., Hangzhou, Zhejiang 310051 (CN)
(72) Inventor: XU, Feng, Hangzhou, Zhejiang 310051 (CN)
(74) Representative: Vogelbruch, Keang
(86) International application number: PCT/CN2021/129241
(87) International publication number: WO 2022/105631

(56) References cited:
- CN-A- 105 282 225
- CN-A- 105 591 796
- CN-A- 108 228 305
- CN-A- 110 287 432
- CN-A- 112 532 703
- US-B2- 10 382 269

## Description

### TECHNICAL FIELD

The present application relates to the field of computer communication and, in particular, to a method and an apparatus for requesting a configuration page.

### BACKGROUND

A system for remotely configuring a device includes: a user terminal, a management platform and a device.

The management platform manages at least one device. The user terminal can configure the devices through the management platform.

During the configuration, the user terminal can provide a configuration page to a user, and the user can complete the corresponding configuration operation on the configuration page. It can be seen that a configuration page is indispensable in remote configuration, and therefore, in remote configuration technology, how to quickly obtain a configuration page is a continuous discussion.

However, in the prior mode of obtaining configuration pages, at every time of requesting a configuration page (for example, the user terminal requests a configuration page the first time, the user terminal switches back to a home configuration page from a sub-configuration page, or the user requests a sub-configuration page associated with a home configuration page, etc.), the user terminal needs to send a request to the management platform. After the management platform obtains a capability set of the requested configuration page from a target device, the management platform returns the capability set of the configuration page to the user terminal. The user terminal can display the configuration page based on this capability set, thus increasing the time required for obtaining a configuration page greatly. In addition, from user's point of view, users have to wait for a long time to view the configuration page after each request, which makes the user experience poor.
US 10382269B2 discloses tools for maintaining devices that can be configured by applying settings thereto.

### SUMMARY

The invention is defined by the method and the apparatus according to the independent claims. Preferred embodiments are defined in the dependent claims.

In view of this, the present application provides a method and an apparatus for requesting a configuration page, for improving the efficiency of requesting a configuration page.

Specifically, the present disclosure is implemented through the following technical solutions.

According to a first aspect of the present invention, defined by independent claim 1, a method for requesting a configuration page is provided. The method is applied to a user terminal and includes:
in a condition that a page display event for the configuration page of a target device is detected, obtaining one or more capability sets corresponding to the configuration page of the target device from cached capability sets of at least one accessible device accessible by the user terminal;
if the capability sets corresponding to the configuration page of the target device are obtained, displaying a corresponding configuration page by using the obtained capability sets;
wherein, before obtaining the capability sets corresponding to the configuration page of the target device from the cached capability sets of at least one accessible device accessible by the user terminal in the condition that the page display event for the configuration page of the target device is detected, the method further comprises:
   obtaining device information of the accessible devices from a management platform;
   according to the device information of the accessible devices, pulling and caching the capability sets corresponding to a home configuration page of each accessible device;
   wherein pulling the capability sets corresponding to the home configuration page of each accessible device comprises:
      for each accessible device, determining M capability set requests for requesting the capability sets of the home configuration page of the corresponding accessible device;
      sending N capability set requests to the corresponding accessible device in parallel, and for each capability set request having been sent, if the capability set requested by the capability set request is not received within a preset time, marking the capability set request as a failed request;
      after sending the M capability set requests, extending the preset time and resending the capability set request marked as the failed request to the corresponding accessible device;
      wherein the M and the N are integers greater than 0, and the M is greater than or equal to the N.

In a preferred embodiment of the method, if the configuration page of the target device is the home configuration page, when the capability sets corresponding to the configuration page of the target device are not obtained, the method further comprises:
if the capability sets corresponding to the home configuration page of the target device are being pulled, after the capability sets corresponding to the home configuration page of the target device are pulled successfully, displaying the home configuration page according to the capability sets corresponding to the home configuration page of the target device, and caching the capability sets corresponding to the home configuration page of the target device;
otherwise, sending a request to the target device to obtain the capability sets corresponding to the home configuration page of the target device, cache the obtained capability sets, and display the corresponding home configuration page according to the obtained capability sets.

In yet a further embodiment of the method, if the configuration page of the target device is a sub-configuration page associated with a home configuration page of the target device, when the capability sets corresponding to the configuration page of the target device are not obtained, the method further comprises:
requesting the capability sets corresponding to the sub-configuration page from the target device, caching the capability sets, and displaying the sub-configuration page according to the capability sets.

In yet a further embodiment of the method, if the capability sets corresponding to the configuration page of the target device exist in the cached capability sets, after displaying the capability sets of the configuration page, the method further comprises:
requesting capability sets corresponding to the configuration page from the target device;
updating the cached capability sets of the configuration page according to the capability sets returned by the target device.

In yet a further embodiment, the method further comprises:
when detecting a modification event for a specified configuration parameter on the configuration page of the target device, searching for a capability set request corresponding to the modified specified configuration parameter in a preset correspondence between specified configuration parameters and capability set requests;
sending the searched capability set request to the target device and receiving the capability set requested by the searched capability set request returned by the target device;
updating the locally cached capability set corresponding to the modified specified configuration parameter based on the capability set returned by the management platform.

According to a second aspect of the present invention, defined by independent claim 6, an apparatus for requesting a configuration page is provided. The apparatus is applied to a user terminal and comprises:
an obtaining unit, for, in a condition that a page display event for the configuration page of a target device is detected, obtaining one or more capability sets corresponding to the configuration page of the target device from cached capability sets of at least one accessible device accessible by the user terminal.
a display unit, for, if the capability sets corresponding to the configuration page of the target device are obtained, displaying a corresponding configuration page by using the obtained capability sets;
a pull unit (1303), for, before obtaining the capability sets corresponding to the configuration page of the target device from the cached capability sets of at least one accessible device accessible to the user terminal in the condition that the page display event for the configuration page of the target device is detected, obtaining device information of the accessible devices from a management platform; according to the device information of the accessible devices, pulling and caching the capability sets corresponding to a home configuration page of each accessible device;
the pull unit (1303) is for, when pulling the capability sets corresponding to the home configuration page of each accessible device, for each accessible device, determining M capability set requests for requesting the capability sets of the home configuration page of the corresponding accessible device and sending N capability set requests in parallel to the corresponding accessible device, and for each capability set request having been sent, if the capability set requested by the capability set request is not received within a preset time, marking the capability set request as a failed request; after sending the M capability set requests, extending the preset time, and resending the capability set request marked as the failed request to the corresponding accessible device;
wherein the M and the N are integers greater than 0, and the M is greater than or equal to the N.

According to a third aspect of the present invention, defined by independent claim 10, a machine-readable storage medium is provided, where the machine-readable storage medium stores machine-executable instructions, and when the machine-executable instructions are executed by the processor, cause the processor to perform the method for requesting a configuration page.

According to a fourth aspect of the present invention, defined by independent claim 11, a computer program stored in a computer-readable storage medium is provided, and when executed by a processor, causes the processor to perform the method for requesting a configuration page.

According to advantages offered by the present invention, when the user terminal detects the page display event for the configuration page of the target device, if the capability set of the configuration page is cached locally, the corresponding configuration page can be displayed based on the locally cached capability set without obtaining the target capability set from the management platform, thus improving the efficiency of requesting a configuration page of the target device. In addition, from the user's point of view, users can quickly view the configuration page after triggering a request for the configuration page. The method of the application can greatly reduce the delay of the display time of the configuration page and greatly improve the user experience.

### BRIEF DESCRIPTION OF THE DRAWINGS

FIG. 1 is a schematic diagram illustrating a configuration page according to an exemplary embodiment of the present application.
FIG. 2 is a network architecture diagram illustrating a system for remotely configuring a device according to an exemplary embodiment of the present application.
FIG. 3 is a flowchart illustrating a method for requesting a configuration page according to an exemplary embodiment of the present application.
FIG. 4 is a flowchart illustrating a capability set caching method for a home configuration page according to an exemplary embodiment of the present application.
FIG. 5 is a schematic diagram illustrating a capability set configuration file for a home configuration page according to an exemplary embodiment of the present application.
FIG. 6 is a schematic diagram illustrating pulling a capability set of a home configuration page according to an exemplary embodiment of the present application.
FIG. 7 is a flowchart illustrating a method for requesting a home configuration page according to an exemplary embodiment of the present application.
FIG. 8 is a flowchart illustrating a method for requesting a sub-configuration page according to an exemplary embodiment of the present application.
FIG. 9 is a schematic diagram illustrating a correspondence between a specified configuration parameter and a capability set request according to an exemplary embodiment of the present application.
FIG. 10 is a flowchart illustrating a method for requesting a home configuration page according to an exemplary embodiment of the present application.
FIG. 11 is a flowchart illustrating a method for requesting a sub-configuration page according to an exemplary embodiment of the present application.
FIG. 12 is a hardware structural diagram illustrating a user terminal according to an exemplary embodiment of the present application.
FIG. 13 is a block diagram illustrating an apparatus for requesting a configuration page according to an exemplary embodiment of the present application.

### DETAILED DESCRIPTION OF THE EMBODIMENTS

Exemplary implementations of the embodiments of the invention will be described in detail herein, with the illustrations thereof represented in the drawings. When the following descriptions involve the drawings, like numerals in different drawings refer to like or similar elements unless otherwise indicated. The exemplary implementations described below, do not represent all embodiments consistent with the present application. Rather, they are merely examples of apparatuses and methods consistent with some aspects of the present invention. The scope of the invention is only defined by the appended claims.

The terms used in the present application are for the purpose of describing particular embodiments only, and are not intended to limit the present application. Terms determined by "a", "the" and "said" in their singular forms in the present application and the appended claims are also intended to include plurality, unless clearly indicated otherwise in the context. It should also be understood that the term "and/or" as used herein is and includes any and all possible combinations of one or more of the associated listed items.

It is to be understood that, although terms "first," "second," "third," and the like may be used in the present application to describe various information, such information should not be limited to these terms. These terms are only used to distinguish one category of information from another. For example, without departing from the scope of the present application, first information may also be referred as second information; and similarly, second information may also be referred as first information. Depending on the context, the word "if" as used herein may be interpreted as "when" or "upon" or "in response to determining".

Before introducing a method provided by the present application, the concepts related to the present application are introduced.

### 1. Capability Set

A capability set refers to a collection of data related to a certain function of a device. For example, if a function of a device is a face detection function, the capability set refers to the collection of data related to the face detection function.

Usually, the functions of the device will be displayed on a configuration page of the device, so the display for the configuration page of the device is related to the capability set of the device.

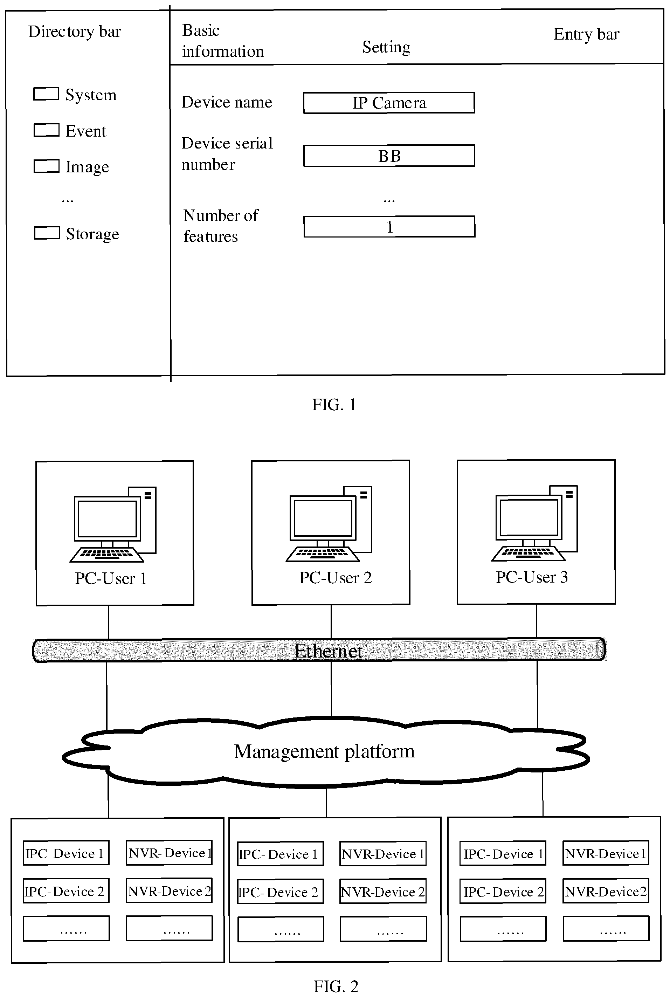

For example, as shown in FIG. 1, the capability set of the device determines the functions (such as image functions, storage functions, etc.) that are contained in a directory bar displayed on the left side of FIG. 1. In addition, the capability set of the device also determines specific entries that are displayed in a configuration entry bar on the right side of FIG. 1.

Furthermore, it should be noted that a configuration page of a device usually includes static resources and dynamic data. Static resources are generally stored on a user terminal.

Static resources can include: style files, HTML files and script files. Style files and HTML files can determine the style of the configuration page, and script files can determine some operations of the configuration page.

Dynamic data can include a capability set related to the configuration page. The dynamic data is generally stored on the device to be configured.

When the user terminal needs to display a configuration page, the corresponding capability set of the configuration page can be obtained from the device to be configured, and the configuration page can be displayed based on the obtained capability set and local static resources.

As described below, the specific process of displaying the home configuration page or sub-configuration page based on the capability set of the home configuration page or sub-configuration page includes: the user terminal, based on the locally cached static resources of the home configuration page or sub-configuration page, as well as the obtained capability set of the home configuration page or sub-configuration page, displays the home configuration page or sub-configuration page. For details, please refer to the above description and the details will not be repeated here. The home configuration page refers to the configuration page requested by the user terminal the first time, which can also be understood as an initial configuration page.

Referring to FIG. 2, FIG. 2 is a network architecture diagram illustrating a system for remotely configuring a device according to an exemplary embodiment of the present application.

A system for remotely configuring a device includes: a user terminal, a management platform and a device.

The user terminal may be any one of various terminal devices including a smart phone, a PC, a server, etc. The management platform may be, for example, a cloud platform. The management platform manages at least one device (for example, the devices can include IPC devices, NVR devices, which are only illustrated by example and not specifically limited here). The user terminal can configure the device through the management platform.

In traditional configuration methods, the user terminal maintains static resources (such as style files, HTML files, and script files) of the configuration pages (including the home configuration page and sub-configuration pages) of each device. When a page display event is detected for the configuration page of the target device, the user terminal can obtain the capability set of the configuration page of the target device from the management platform. Then, the user terminal can display the configuration page of the target device based on the capability set of the configuration page and the static resources of the configuration page of the target device. The user terminal can send configuration information entered by the user through the configuration page to the management platform, and the management platform can distribute the configuration information to the target device, thus completing the configuration of the target device.

However, in the existing methods of obtaining configuration pages, when detecting a page display event for a configuration page of a target device, a user terminal obtains the capability set of the configuration page from the management platform, and the user terminal displays the configuration page based on this capability set. At every time of detecting a page display event for a configuration page, the user terminal needs to obtain the capability set of the configuration page from the management platform, thereby greatly increasing the acquisition time of the configuration page. In addition, from the user's point of view, users have to wait for a long time to view the configuration page after triggering a request for the configuration page, resulting in poor user experience.

In view of this, this application proposes a method for requesting a configuration page, in which a user terminal actively pulls (or, GET) and caches capability sets of home configuration pages of all accessible devices that the user terminal can access. In this application, the operation related to "pull" can be understood as: making a request, obtaining data and then caching the data.

When the user terminal detects the page display event for the configuration page of the target device, if the capability set of the configuration page is cached locally, the corresponding configuration page can be displayed based on the locally cached capability set.

When the user terminal detects the page display event for the configuration page of the target device, if the capability set of the configuration page is cached locally, the corresponding configuration page can be displayed based on the locally cached capability set without obtaining the target capability set from the management platform, thus improving the efficiency of requesting a configuration page of the target device. In addition, from the user's point of view, users can quickly view the configuration page after triggering a request for the configuration page. The method of the application can greatly reduce the delay of the display time of the configuration page and greatly improve the user experience.

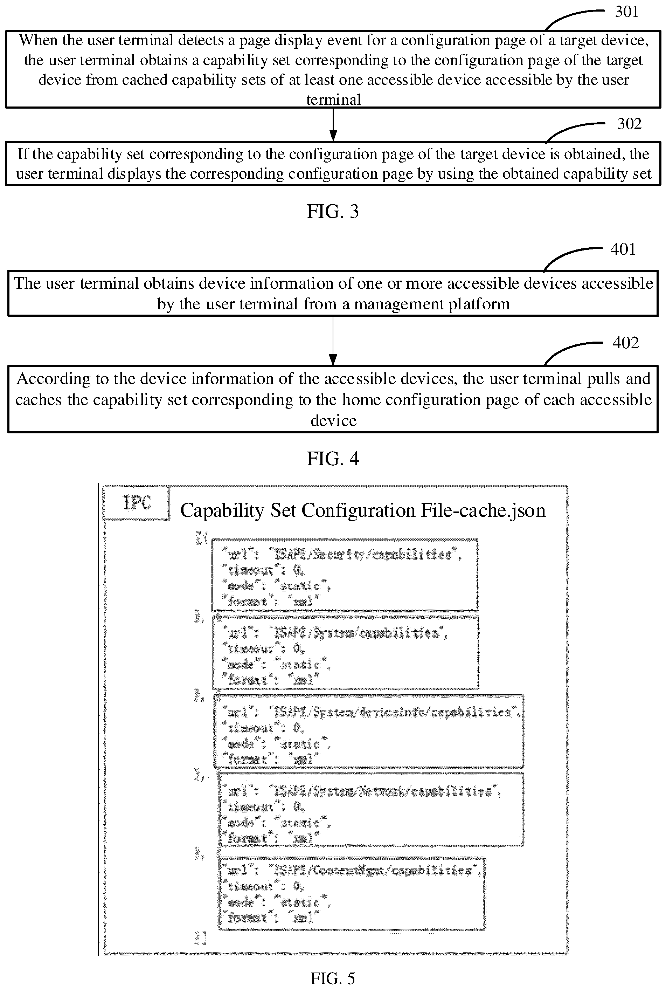

Referring to FIG. 3, FIG. 3 is a flowchart illustrating a method for requesting a configuration page according to an exemplary embodiment of the present application. The method may be applied to a user terminal and may include the following steps.

Step 301: when the user terminal detects a page display event for a configuration page of a target device, the user terminal obtains a capability set corresponding to the configuration page of the target device from cached capability sets of at least one accessible device accessible by the user terminal.

Step 302: if the capability set corresponding to the configuration page of the target device is obtained, the user terminal displays the corresponding configuration page by using the obtained capability set.

The configuration page can be the home configuration page of the target device or the sub-configuration page associated with the home configuration page of the target device. It is only illustrated by example and not specifically limited here.

Hereinafter, the method for requesting a configuration page provided by the present application will be exemplified from two aspects: one is the configuration page as a home configuration page, the other is the configuration page as a sub-configuration page.

### 1. The configuration page is a home configuration page.

Below, the method for requesting the home configuration page is introduced in detail from two aspects: caching the capability set of the home configuration page and displaying the home configuration page.

### 1.1) Caching a capability set of the home configuration page.

Referring to FIG. 4, FIG. 4 is a flowchart illustrating a capability set caching method for a home configuration page according to an exemplary embodiment of the present application. The method may be applied to a user terminal and may include the following steps.

Step 401: the user terminal obtains device information of one or more accessible devices accessible by the user terminal from a management platform.

In some examples, the user terminal may send an acquisition request to a management platform (e.g., a management device) for acquiring device information of one or more accessible devices, the acquisition request carrying an identifier of the user terminal. After receiving the acquisition request, the management device can determine the accessible device accessible by the user terminal among all devices managed by the management device, and send the device information of the determined accessible device to the user terminal.

The device information of the accessible device can include: a device identifier. Of course, the device information of the accessible device may also include other information, such as device working status information and the like, which are only illustrated by example and not specifically limited here.

In some examples, the user terminal may send the received device information of the accessible devices to a local service (e.g., Web control), and then the local service may pull the capability set corresponding to the home configuration page of each accessible device.

Step 402: according to the device information of the accessible devices, the user terminal pulls and caches the capability set corresponding to the home configuration page of each accessible device.

In an implementation, the user terminal may add the device identifiers of the accessible devices to a pull queue and according to the order of the device identifier in the queue, pull the capability set of the home configuration page of a corresponding device in the queue in sequence.

Every time a capability set of the home configuration page of the device is pulled, the pulled capability set is cached locally.

In an implementation, the user terminal can pull capability sets of home configuration pages of a plurality of accessible devices in parallel, and the pull procedure of the capability set of the home configuration page of each accessible device is independent of each other.

The following describes a way to pull the capability set of the home configuration page of the accessible device.

The user terminal is provided with a capability set configuration file (i.e. cache.json) of the home configuration page of the accessible device. The capability set configuration file includes capability set requests for at least one capability set of the device. It should be noted that the capability set configuration files of the home configuration pages of different types of devices are different, and the home configuration pages of the same type of devices can share one capability set configuration file, for example, all front-end devices can share one capability set configuration file and all back-end devices can share one capability set configuration file.

For example, as shown in FIG. 5, FIG. 5 is a schematic diagram illustrating a capability set configuration file for a home configuration page according to an exemplary embodiment of the present application.

As shown in FIG. 5, the content in each box in FIG. 5 corresponds to a capability set request.

In an implementation, by executing the capability set configuration file, the user terminal can sequentially send M capability set requests in the capability set configuration file, where M is an integer greater than 0.

Of course, in order to improve the sending efficiency of the capability set requests, the user terminal may also send N capability set requests in parallel at a time, where N is an integer greater than 0, and M may be greater than or equal to N, which is not specifically limited here.

In particular, the user terminal may send N capability set requests to the accessible device in parallel, so that the accessible device may receive and process the N capability set requests in parallel. For each capability set request, if the capability set requested by the capability set request is received within a preset time and there is a capability set request to be sent, the user terminal obtains, from the M capability set requests, one or more next capability set requests to be sent, and sends them. If the capability set requested by the capability set request is received within a preset time, and there is no capability set request to be sent, it is determined that the sending of the M capability set requests is completed. If the capability set requested by the capability set request is not received within a preset time, the capability set request is marked as a failed request.

After sending the M capability set requests, the preset time is extended and the capability set request marked as a failed request is sent to the accessible device.

Specifically, in the present application, a request queue pool with a capacity of N requests can be set. When the capability set requests in the capability set configuration file are sent to an accessible device, N capability set requests can be added to the request queue pool. The user terminal can send the capability set requests in the request queue pool to the accessible device.

For each capability set request in the request queue pool, if the capability set requested by the capability set request is received within a preset time, the user terminal deletes the capability set request in the request queue pool, and adds a next capability set request to be sent in the request queue pool.

If the user terminal does not receive the capability set requested by the capability set request within the preset time, the capability set request is deleted from the request queue pool, and the capability set request is marked as a failed request. After all the capability set requests for requesting the capability sets of the home configuration page of the accessible device are sent, the preset time is extended, and the capability set request marked as the failed request is sent to the accessible device.

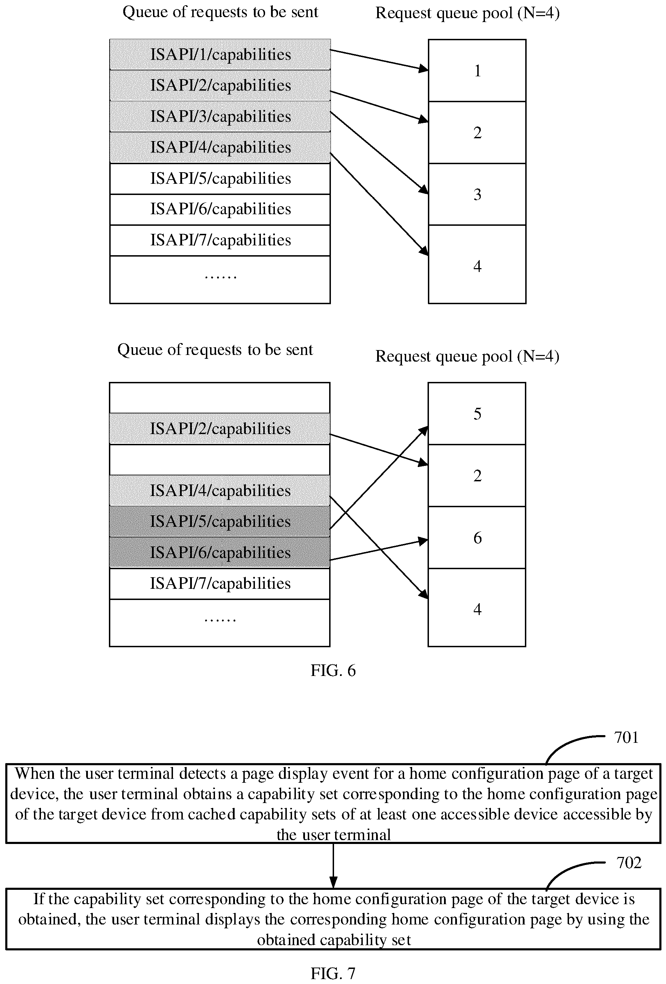

For example, as shown in FIG. 6, the capacity N of the request queue pool is assumed to be 4. In FIG. 6, "ISAPI/1/capabilities" represents capability set request 1, "ISAPI/2/capabilities" represents capability set request 2, and so on.

The user terminal may add the capability set request 1, capability set request 2, capability set request 3, and capability set request 4 to the request queue pool. The user terminal can send these four capability set requests in the request queue pool in parallel.

Assuming that the user terminal first receives the capability sets corresponding to the capability set request 1 and the capability set request 3 within a preset time, the capability set request 1 and the capability set request 3 are deleted from the request queue pool, and the capability set request 5 and the capability set request 6 are added to the request queue pool. The user terminal can send the capability set request 5 and the capability set request 6 in the request queue pool.

Assuming that the user terminal has not received the capability sets requested by the capability set request 2 and the capability set request 4 within a preset time, the user terminal may mark the capability set request 2 and the capability set request 4 as failed requests, and add the capability set request 7 and the capability set request 8 to the request queue pool.

After sending all the capability set requests, the preset time is extended and the capability set request 2 and capability set request 4 marked as the failed requests are resent.

In addition, it should be noted that when the user terminal sends the capability set request to the accessible device, the user can directly send the capability set request to the accessible device directly connected with the user terminal and receive the capability set directly returned by the accessible device. Of course, the user terminal can also send the capability set request to the accessible device through the management platform to realize "sending a capability set request to the accessible device".

In particular, the user terminal sends a capability set request to the management platform, and then the management platform can forward the capability set request to the accessible device after receiving the capability set request sent by the user terminal. The accessible device then returns the requested capability set to the management platform, and the management platform can forward the capability set returned by the accessible device to the user terminal.

In some examples, sending the capability set request to the management platform or the accessible device by the user terminal may be accomplished by: sending, by a browser, a capability set request for a configuration page to a local service (e.g. a Web control) after the user executes a triggering operation on the configuration page through a browser window on the user terminal, and if the local service determines that the user terminal does not cache the capability set for the configuration page locally, sending, by the local service, the capability set request to the accessible device, or sending, by the local service, the capability set request to the management platform which forwards the request to the accessible device.

In addition, it should be noted that in the present application, the user terminal can send the capability set request to the accessible device and receive the capability set returned by the accessible device. After receiving the capability set, the user terminal can rewrite the capability set request to obtain a file name of the capability set stored by the user.

When rewriting, the user terminal can convert the backslash in the capability set request into a symbol supported by the file name (such as an underline), and then add a data format at the end of the capability set request to form the file name.

For example, if the capability set request is supposed to be: http://127.0.0.1/ISAPI/Security/capabilities, the file name obtained by rewriting the capability set request is ISAPI_Security_capabilities. xml, where xml is a data format.

For another example, if the capability set request is supposed to be: http://127.0.0.1/ISAPI/Security/capabilities?format=json, the file name from rewriting the capability set request is: ISAPI_Security_capabilities. json, where json is a data format.

### 1.2) Displaying the home configuration page

Referring to FIG. 7, FIG. 7 is a flowchart illustrating a method for requesting a home configuration page according to an exemplary embodiment of the present application. The method may be applied to a user terminal and may include the following steps.

Step 701: when the user terminal detects a page display event for a home configuration page of a target device, the user terminal obtains a capability set corresponding to the home configuration page of the target device from cached capability sets of at least one accessible device accessible by the user terminal.

In some examples, when the user terminal obtains the device information of the accessible devices accessible by the user terminal sent by the management platform, the user terminal may display the identifier of each accessible device to the user.

The user will select the target device to be accessed this time according to the identifier of each accessible device displayed by the user terminal. Once the user selects the target device, the display of the home configuration page of the target device will be triggered.

In addition, when the user performs operations such as returning to the home configuration page from the sub-configuration page of the target device or the like, the display of the home configuration page of the target device will also be triggered.

When detecting the page display event of the home configuration page of the target device, the user terminal can detect whether there is a capability set corresponding to the home configuration page of the target device in the cached capability sets of at least one accessible device accessible by the user terminal.

When detecting whether there is a capability set corresponding to the home configuration page of the target device in the cached capability sets of at least one accessible device accessible by the user terminal, the user terminal can detect whether there is a capability set folder corresponding to the target device in the locally cached capability set files of the accessible devices.

If the capability set folder corresponding to the target device is cached locally, the user terminal can further search whether the capability set corresponding to the home configuration page of the target device is cached in the capability set folder. If a capability set corresponding to the home configuration page is cached in the folder, it is determined that the capability set corresponding to the home configuration page is cached locally. If there is no capability set corresponding to the home configuration page cached in the folder, it is determined that there is no capability set corresponding to the home configuration page cached locally.

Otherwise, if the capability set folder corresponding to the target device is not cached locally, it is determined that the capability set corresponding to the home configuration page is not cached locally.

Step 702: if the capability set corresponding to the home configuration page of the target device is obtained, the user terminal displays the corresponding home configuration page by using the obtained capability set.

In some examples, if the capability set corresponding to the home configuration page of the target device is cached locally, the user terminal can obtain the capability set corresponding to the home configuration page of the target device from the locally cached capability sets of at least one accessible device, and the user terminal can display the corresponding home configuration page by using the obtained capability set. For example, the user terminal can display the corresponding home configuration page based on the static resources of the home configuration page of the target device stored locally and the obtained capability set corresponding to the home configuration page of the target device.

In addition, in the embodiment of the present application, when the user terminal does not obtain the capability set corresponding to the home configuration page of the target device in the cached capability sets of at least one accessible device accessible by the user terminal, if the capability set corresponding to the home configuration page of the target device is being pulled, after the capability set corresponding to the home configuration page of the target device is pulled successfully, the user terminal can display the home configuration page of the target device according to the capability set corresponding to the home configuration page of the target device, and cache the capability set corresponding to the home configuration page of the target device. Otherwise, the user terminal can send a request to the target device to obtain and cache the capability set of the home configuration page of the target device, and display the corresponding home configuration page according to the obtained capability set.

In some examples, if there is no capability set corresponding to the home configuration page of the target device in the cached capability sets of the accessible devices, the user terminal can detect whether the capability set of the home configuration page of the target device is being pulled.

In an implementation, the user terminal can configure a pulling identifier for a device of which the capability set of the home configuration page is being pulled, where the pulling identifier indicates "being pulled". When detecting whether the capability set of the home configuration page of the target device is being pulled, the user terminal can detect whether the target device in a pull queue is configured with a pulling identifier indicating "being pulled", and if so, the user terminal can determine that the capability set of the home configuration page of the target device is being pulled. If the target device does not have the pulling identifier indicating "being pulled", the user terminal can determine that the capability set of the home configuration page of the target device is not being pulled.

1) If the capability set corresponding to the home configuration page of the target device is being pulled.

If the capability set corresponding to the home configuration page of the target device is being pulled, after the capability set corresponding to the home configuration page of the target device is pulled successfully, the user terminal can display the home configuration page according to the capability set corresponding to the home configuration page of the target device, and cache the capability set corresponding to the home configuration page of the target device.

In an implementation of the present application, the user terminal may wait if the capability set of the home configuration page of the target device is being pulled. Then, the user terminal can monitor the pulling identifier of the target device in real time, and if the pulling identifier of the target device changes from "being pulled" to "pulled completely", the user terminal can determine that the pull of the capability set of the home configuration page of the target device is completed. Then, the user terminal can display the target configuration page based on the capability set of the home configuration page, and cache the capability set corresponding to the home configuration page of the target device.

2) If the capability set corresponding to the home configuration page of the target device is not being pulled.

If the capability set corresponding to the home configuration page of the target device is not being pulled, the user terminal can send a request to the target device to obtain and cache the capability set of the home configuration page of the target device, and display the corresponding home configuration page according to the obtained capability set.

When the user terminal sends the request to the target device, the user terminal can send the request directly to the target device. Of course, the user terminal can also send the request to the management platform, so that the management platform can forward the request to the target device to realize "sending the request to the target device". It is only illustrated by example and not specifically limited here.

In addition, after obtaining the capability set corresponding to the configuration page of the target device from the target device, the user terminal can also mark the target device as a "having-pulled" device. In an optional marking mode, the user terminal may delete the target device identifier or the like from the pull queue described above. This is only an exemplary description of the marking mode and the marking mode is not specifically limited here.

### 2) Displaying the sub-configuration page

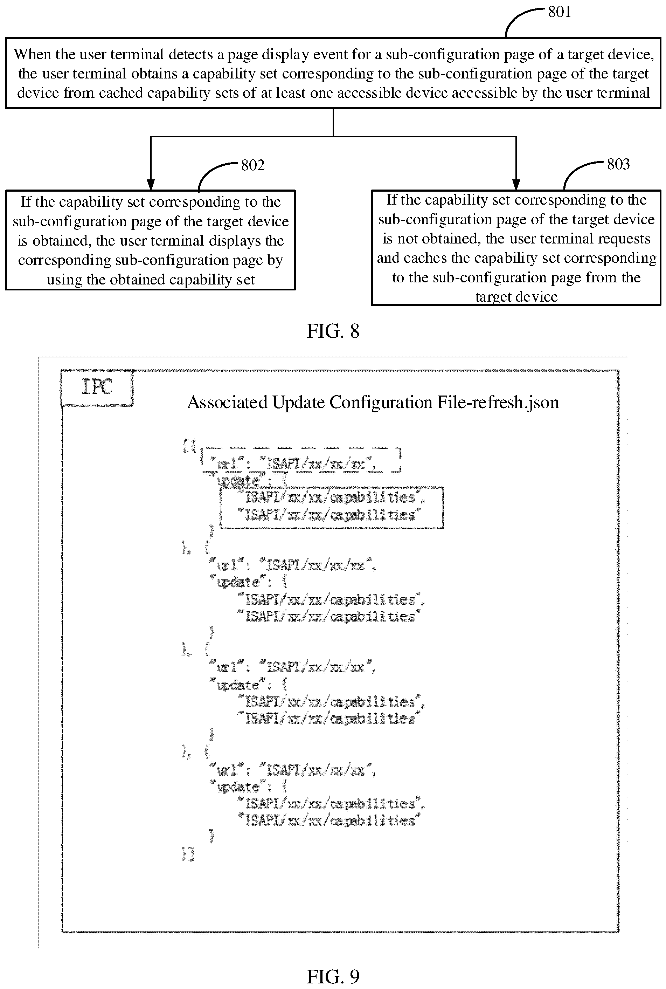

Referring to FIG. 8, FIG. 8 is a flowchart illustrating a method for requesting a sub-configuration page according to an exemplary embodiment of the present application. The method may be applied to a user terminal and may include the following steps.

Step 801: when the user terminal detects a page display event for a sub-configuration page of a target device, the user terminal obtains a capability set corresponding to the sub-configuration page of the target device from cached capability sets of at least one accessible device accessible by the user terminal.

Step 802: if the capability set corresponding to the sub-configuration page of the target device is obtained, the user terminal displays the corresponding sub-configuration page by using the obtained capability set.

Step 803: if the capability set corresponding to the sub-configuration page of the target device is not obtained, the user terminal requests and caches the capability set corresponding to the sub-configuration page from the target device.

When requesting the capability set corresponding to the sub-configuration page from the target device, the user terminal can directly send the request to the target device to obtain the capability set directly returned by the target device. Of course, the user terminal can also send the request to the management platform, so that the management platform can send the request to the target device to obtain the capability set corresponding to the sub-configuration page, and realize "requesting the capability set corresponding to the sub-configuration page from the target device". It is not specifically limited here.

In addition, in the embodiment of the present application, the capability sets of the configuration pages (including the home configuration page or the sub-configuration page) maintained on the target device are not invariable. In order to ensure that the capability sets of the configuration pages cached by the user terminal are consistent with the capability sets of the configuration pages maintained on the target device, the present application also adopts the following method to update the capability sets cached on the user terminal.

The update method is described in detail below.

In the embodiments of the present application, some configuration parameters on some of the home configuration pages or sub-configuration pages are associated with the capability sets (these configuration parameters are referred to herein as specified configuration parameters for convenience of description).

For example, the specified configuration parameter may be a capability set enable configuration parameter, when the capability set enable configuration parameter indicates enabling a capability set, the device will turn on the capability set, and when the capability set enable configuration parameter indicates disabling a capability set, the device will turn off the capability set.

After the administrator modifies the specified configuration parameters of the home configuration page or the sub-configuration page of the target device, the user terminal can send a modification instruction of the specified configuration parameters to the target device through the management platform, and the target device can modify the specified configuration parameters of the device per se based on the instruction. After the modification of the specified configuration parameters, the capability sets currently maintained by the target device will be changed.

In the present application, there are two cases in which the capability sets currently maintained by the target device are changed.

In a first case, other users modify the specified configuration parameters on the home configuration page or sub-configuration page of the target device through other user terminals of the other users, thus causing the capability sets currently maintained by the target device to change.

In a second case, the current user modifies the specified configuration parameters of the home configuration page or sub-configuration page of the target device by using the user terminal of the current user, thus causing the capability sets currently maintained by the target device to change.

These two cases are described below, respectively.

In the first case, other users modify the specified configuration parameters on the home configuration page or sub-configuration page of the target device through other user terminals of the other users, thus causing the capability sets currently maintained by the target device to change.

In the first case, since the modification of the specified configuration parameters occurs on other user terminals, the current user terminal cannot know which specified parameters on the target device are modified and which capability sets on the target device are modified. Therefore, in such case, in order to ensure that the capability sets of the home configuration page or sub-configuration page of the target device cached by the user terminal are consistent with the capability sets corresponding to the home configuration page or sub-configuration page maintained on the target device, the user terminal needs to obtain the capability sets of the home configuration page or sub-configuration page currently maintained by the target device after displaying the corresponding home configuration page or sub-configuration page based on the cached capability sets of the home configuration page or sub-configuration page each time, so as to update the locally cached capability sets of the home configuration page or sub-configuration page based on the capability sets of the home configuration page or sub-configuration page currently maintained by the target device to keep the consistency of the two capability sets.

Specifically, in the present application, when the user terminal detects a page display event for the home configuration page or sub-configuration page of the target device, if the capability sets of the home configuration page or sub-configuration page of the target device exist in the cached capability sets, the user terminal also needs to request the capability sets corresponding to the home configuration page or sub-configuration page of the target device from the target device after displaying the home configuration page or sub-configuration page according to the cached capability sets of the home configuration page or sub-configuration page.

The target device can return the local capability sets of the home configuration page or sub-configuration page currently maintained to the user terminal.

The user terminal can use the returned capability sets of the home configuration page or sub-configuration page currently maintained by the target device to update the locally cached capability sets of the home configuration page or sub-configuration page of the target device, so that the locally cached capability sets of the home configuration page or sub-configuration page of the target device are consistent with the capability sets of the home configuration page or sub-configuration page currently maintained by the target device.

In the second case, the current user modifies the specified configuration parameters of the home configuration page or sub-configuration page of the target device by using the user terminal of the current user, thus causing the capability sets currently maintained by the target device to change.

In the second case, since the modification of the specified configuration parameters occurs on the user terminal per se, the user terminal can know which specified configuration parameters are modified, so the user terminal can adopt an active updating mode to make the capability sets corresponding to the home configuration page or sub-configuration page cached on the user terminal consistent with the capability sets corresponding to the home configuration page or sub-configuration page maintained on the target device.

In particular, the user terminal is also configured with a correspondence between the specified configuration parameters and at least one capability set. This correspondence indicates that the change of the configuration parameters will cause the change of the capability sets maintained on the device.

For example, as shown in FIG. 9, the dashed box represents a configuration parameter, and the contents of the solid box represent a capability set request associated with the configuration parameter.

In the embodiments of the present application, in order to make the locally cached capability sets consistent with the capability sets maintained on the target device, when detecting a modification event for a configuration parameter on the home configuration page or the sub-configuration page, the user terminal can search for a capability set request corresponding to the modified configuration parameter in a preset correspondence (i.e., refresh. json) between configuration parameters and capability set requests, and send the capability set request to the target device.

The target device can return the capability set requested by the capability set request to the user terminal. The user terminal may update the locally cached capability set corresponding to the specified configuration parameter based on the capability set returned by the target device.

When the user terminal sends the capability set request to the target device, the user terminal can directly send the capability set request to the target device and receive the capability set directly returned by the target device.

Of course, the user terminal can also send the capability set request to the target device through the management platform and receive the capability set forwarded by the management platform, so as to achieve sending a searched capability set request to the target device and receiving a capability set requested by the searched capability set request returned by the target device.

In particular, the user terminal can send a capability set request to the management platform, and then the management platform can forward the capability set request to the target device after receiving the capability set request sent by the user terminal. The target device then returns the requested capability set to the management platform, and the management platform can forward the capability set returned by the target device to the user terminal.

It can be seen from the above description that, in a first aspect, since the user terminal actively pulls and caches the capability sets of the home configuration pages of all accessible devices accessible by the user terminal after logging in to the management platform, when a page display event for the home configuration page of the target device is detected, if the capability sets of the home configuration page have been pulled, the capability sets of the home configuration page can be obtained from the local cache without requesting the management platform to obtain the target capability sets, thus improving the request efficiency of the target configuration page. In addition, from the user's point of view, users can quickly view the home configuration page after triggering a request for the home configuration page. The method of the application can greatly reduce the delay of the display time of the home configuration page and greatly improve the user experience.

In a second aspect, since the capability sets of the configuration page can be shared, when the cached capability sets of the home configuration page include the capability sets of the sub-configuration page, the sub-configuration page can be displayed directly based on the cached capability sets of the sub-configuration page without downloading the capability sets of the sub-configuration page, thus improving the request efficiency of the capability sets of the sub-configuration page.

In a third aspect, the capability sets of the device can be updated by the administrator, so the present application also designs an updating mode of the locally cached capability sets corresponding to the above two cases, so that the locally cached capability sets are consistent with the capability sets maintained by device.

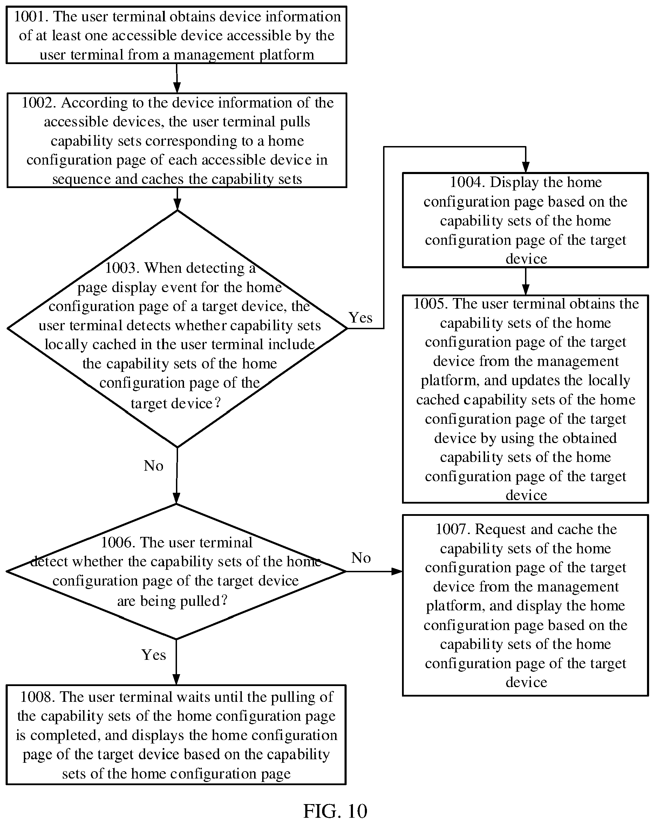

Referring to FIG. 10, FIG. 10 is a flowchart illustrating a method for requesting a home configuration page according to an exemplary embodiment of the present application. The method may be applied to a user terminal and may include the following steps.

Step 1001: the user terminal obtains device information of at least one accessible device accessible by the user terminal from a management platform.

Step 1002: according to the device information of the accessible devices, the user terminal pulls capability sets corresponding to a home configuration page of each accessible device in sequence and caches the capability sets.

In an implementation, the user terminal may pull the capability sets of the home configuration pages of a plurality of accessible devices in parallel and cache the capability sets.

Step 1003: when detecting a page display event for the home configuration page of a target device, the user terminal detects whether capability sets locally cached in the user terminal include the capability sets of the home configuration page of the target device.

If the locally cached capability sets include the capability sets of the home configuration page of the target device, then step 1004 to step 1005 are executed.

If the locally cached capability sets do not include the capability sets of the home configuration page of the target device, then step 1006 to step 1008 are executed.

It should be noted that the execution of step 1002 and step 1003 is independent of each other and does not affect each other. In other words, when step 1003 is being executed by one user terminal, the pull procedure of step 1002 may still be executed.

Step 1004: if the locally cached capability sets include the capability sets of the home configuration page of the target device, the user terminal displays the home configuration page based on the capability sets of the home configuration page of the target device.

Step 1005: the user terminal obtains the capability sets of the home configuration page of the target device from the management platform, and updates the locally cached capability sets of the home configuration page of the target device by using the obtained capability sets of the home configuration page of the target device.

Step 1006: if the locally cached capability sets do not include the capability sets of the home configuration page of the target device, the user terminal can detect whether the capability sets of the home configuration page of the target device are being pulled.

If the capability sets of the home configuration page of the target device are not being pulled, then step 1007 is executed.

If the capability sets of the home configuration page of the target device are being pulled, then step 1008 is executed.

Step 1007: if the capability sets of the home configuration page of the target device are not being pulled, the user terminal requests and caches the capability sets of the home configuration page of the target device from the management platform, and displays the home configuration page based on the capability sets of the home configuration page of the target device.

Step 1008: if the capability sets of the home configuration page of the target device are being pulled, the user terminal waits until the pulling of the capability sets of the home configuration page is completed, and displays the home configuration page of the target device based on the capability sets of the home configuration page.

In addition, in the present application, when detecting a modification event for the specified configuration parameter on the home configuration page of the target device, the user terminal searches for the capability set request corresponding to the modified specified configuration parameter in the preset correspondence between the specified configuration parameters and the capability set requests. Then, the user terminal may send the searched capability set request to the management platform, receive the capability set requested by the searched capability set request returned by the management platform, and update the locally cached capability set corresponding to the modified specified configuration parameter based on the returned capability set.

For details, please refer to the above description and the details will not be repeated here.

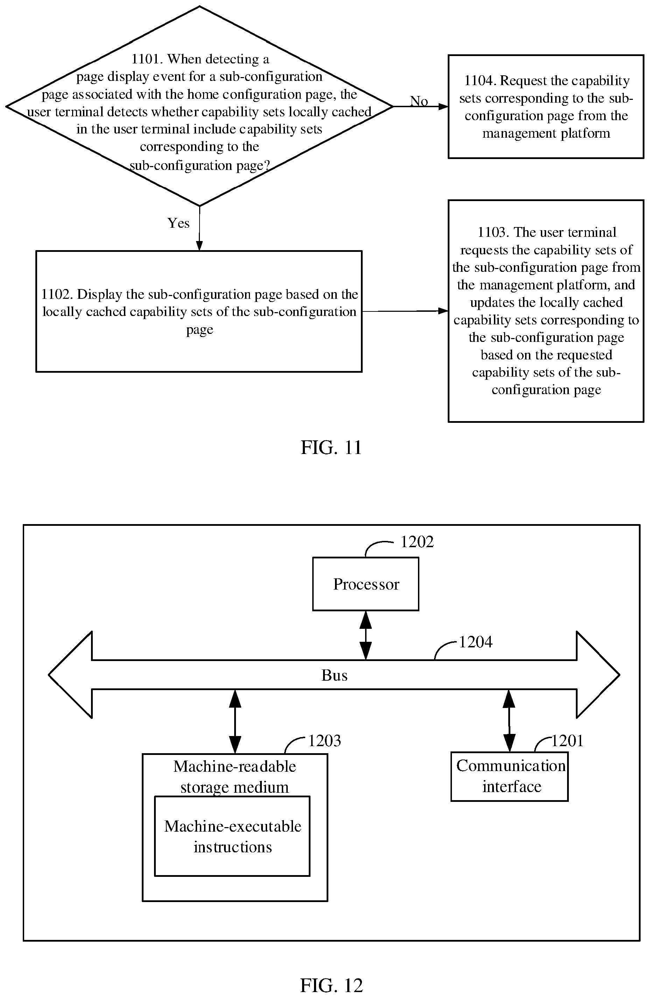

Referring to FIG. 11, FIG. 11 is a flowchart illustrating a method for requesting a sub-configuration page according to an exemplary embodiment of the present application. The method may be applied to a user terminal and may include the following steps.

Step 1101: when detecting a page display event for a sub-configuration page associated with the home configuration page, the user terminal detects whether capability sets locally cached in the user terminal include capability sets corresponding to the sub-configuration page.

If the locally cached capability sets include the capability sets corresponding to the sub-configuration page, then step 1102 to step 1003 are executed.

If the locally cached capability sets do not include the capability sets corresponding to the sub-configuration page, then step 1104 is executed.

Step 1102: if the locally cached capability sets include the capability sets of the sub-configuration page, the user terminal displays the sub-configuration page based on the locally cached capability sets of the sub-configuration page.

Step 1103: the user terminal requests the capability sets of the sub-configuration page from the management platform, and updates the locally cached capability sets corresponding to the sub-configuration page based on the requested capability sets of the sub-configuration page.

Step 1104: if the locally cached capability sets do not include the capability sets of the sub-configuration page, the user terminal requests the capability sets corresponding to the sub-configuration page from the management platform.

In addition, in the present application, when detecting a modification event for the specified configuration parameter on the sub-configuration page of the target device, the user terminal searches for a capability set request corresponding to the modified specified configuration parameter in the preset correspondence between the specified configuration parameters and the capability set requests. Then, the user terminal may send the searched capability set request to the management platform, receive the capability set requested by the searched capability set request returned by the management platform, and update the locally cached capability set corresponding to the modified specified configuration parameter based on the returned capability set.

For details, please refer to the above description and the details will not be repeated here.

In addition, the application also provides an electronic device, the electronic device includes a non-transitory machine-readable storage medium and a processor.
where the machine-readable storage medium is for storing machine-executable instructions; and
the processor is for reading the machine-executable instructions on the machine-readable storage medium and executing the machine-executable instructions to implement the method for requesting a configuration page described above.

In an example, as shown in FIG. 12, the electronic device may include a communication interface 1201, a bus 1204, in addition to a processor 1202, a machine-readable storage medium 1203. The communication interface 1201, the processor 1202 and the machine-readable storage medium 1203 communicate with each other through a bus 1204. The processor 1202 may execute the method for requesting a configuration page described above by reading and executing the machine-executable instructions in the machine-readable storage medium 1203.

Those skilled in the art can understand that the configuration shown in FIG. 12 does not constitute a limitation of the electronic device and may include more or fewer components than illustrated, combine certain components, or employ different component arrangements.

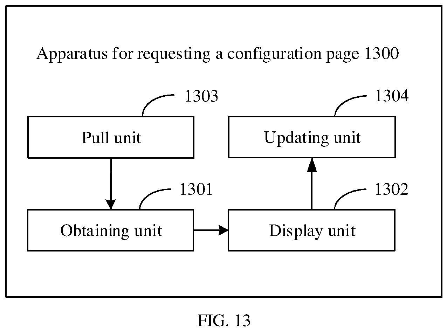

Referring to FIG. 13, FIG. 13 is a block diagram illustrating an apparatus for requesting a configuration page 1300 according to an exemplary embodiment of the present application. The apparatus can be applied to a user terminal and can generally include:
an obtaining unit 1301, for, in a condition that a page display event for the configuration page of a target device is detected, obtaining one or more capability sets corresponding to the configuration page of the target device from cached capability sets of at least one accessible device accessible by the user terminal;
a display unit 1302, for, if the capability sets corresponding to the configuration page of the target device are obtained, displaying a corresponding configuration page by using the obtained capability sets.

In an example, the apparatus further includes:
a pull unit 1303, for, before obtaining the capability sets corresponding to the configuration page of the target device from the cached capability sets of at least one accessible device accessible to the user terminal in the condition that the page display event for the configuration page of the target device is detected, obtaining device information of the accessible devices from a management platform; according to the device information of the accessible devices, pulling and caching the capability sets corresponding to a home configuration page of each accessible device.

In an example, the display unit 1302 is further for: if the configuration page of the target device is the home configuration page, when the capability sets corresponding to the configuration page of the target device are not obtained, if the capability sets corresponding to the home configuration page of the target device are being pulled, after the capability sets corresponding to the home configuration page of the target device are pulled successfully, displaying the home configuration page according to the capability sets corresponding to the home configuration page of the target device, and caching the capability sets corresponding to the home configuration page of the target device; otherwise, sending a request to the target device to obtain the capability sets corresponding to the home configuration page of the target device, and cache the obtained capability sets, and display the corresponding home configuration page based on the obtained capability sets.

In an example, the display unit 1302 is further for: if the configuration page of the target device is a sub-configuration page associated with a home configuration page of the target device, when the capability sets corresponding to the configuration page of the target device are not obtained, requesting the capability sets corresponding to the sub-configuration page from the target device, caching the capability sets, and displaying the sub-configuration page according to the capability sets.

In an example, the apparatus further includes:
an updating unit 1304, for, if the capability sets corresponding to the configuration page of the target device exist in the cached capability sets, after displaying the capability sets of the configuration page, requesting capability sets corresponding to the configuration page from the target device; updating the cached capability sets of the configuration page according to the capability sets returned by the target device;
   and/or
for, when detecting a modification event for a specified configuration parameter on the configuration page of the target device, searching for a capability set request corresponding to the modified specified configuration parameter in a preset correspondence between specified configuration parameters and capability set requests; sending the searched capability set request to the target device, and receiving the capability set requested for the searched capability set request returned by the target device; updating the locally cached capability set corresponding to the modified specified configuration parameter based on the capability set returned by the management platform.

In an example, the pull unit 1303 is for: when pulling the capability sets corresponding to the home configuration page of each accessible device, for each accessible device, determining M capability set requests for requesting the capability sets of the home configuration page of the corresponding accessible device and sending N capability set requests in parallel to the corresponding accessible device, and for each capability set request having been sent, if the capability set requested by the capability set request is not received within a preset time, marking the capability set request as a failed request; after sending the M capability set requests, extending the preset time, and resending the capability set request marked as the failed request to the corresponding accessible device.

Those skilled in the art can understand that the block diagram shown in FIG. 13 does not constitute a limitation of the apparatus for requesting the configuration page and may include more or fewer units than illustrated.

In addition, the application also provides a machine-readable storage medium, where the machine-readable storage medium stores machine-executable instructions, and when the machine-executable instructions are executed by the processor, the method for requesting a configuration page is realized.

The machine readable storage medium mentioned herein may be any of electronic, magnetic, optical or other physical storage apparatuses and may contain or store information such as executable instructions, data and so on. For example, the machine-readable storage medium may be a volatile memory, a non-volatile memory or similar storage medium. In particular, the machine-readable storage medium may be a Random Access Memory (RAM), a volatile memory, a non-volatile memory, a flash memory, a storage drive (e.g. hard disk drive), a solid state hard disk, any type of storage disk (e.g., compact disk, Digital Video Disk (DVD)), or a similar storage medium, or a combination thereof.

In addition, the application also provides a computer program stored in a computer-readable storage medium, and when the processor executes the computer program, causes the processor to implement the method for requesting a configuration page

For how the functions and effects of the units in the above apparatus are implemented, reference can be made to the implementation process of the corresponding steps in the above methods, which is not described here.

As for the apparatus embodiment, since it basically corresponds to the method embodiment, the relevant part may refer to the description of the method embodiment. The device implementations described above are merely illustrative, wherein the units described as separate components may or may not be physically separated, and the components displayed as units may or may not be physical units, that is, may be located in one place or distributed to multiple units in a network. Some or all of the modules may be selected according to actual needs to achieve the objectives of the solutions of the present application. Those of ordinary skill in the art can understand and implement the solutions without any creative efforts.

The above are only exemplary implementations, and are not intended to limit the scope of the invention. Any modification, equivalent replacement, or improvement may be made, provided that, the any modification , equivalent replacement or improvement, fall within the scope of the invention which is only defined by the appended claims.

## Claims

1. A method for requesting a configuration page, wherein the method is applied to a user terminal and comprises:
in a condition that a page display event for the configuration page of a target device is detected, obtaining (301) one or more capability sets corresponding to the configuration page of the target device from cached capability sets of at least one accessible device accessible by the user terminal;
if the capability sets corresponding to the configuration page of the target device are obtained, displaying (302) a corresponding configuration page by using the obtained capability sets;
wherein before obtaining the capability sets corresponding to the configuration page of the target device from the cached capability sets of at least one accessible device accessible by the user terminal in the condition that the page display event for the configuration page of the target device is detected, the method further comprises:
obtaining (401) device information of the accessible devices from a management platform;
according to the device information of the accessible devices, pulling (402) and caching the capability sets corresponding to a home configuration page of each accessible device;
wherein pulling the capability sets corresponding to the home configuration page of each accessible device comprises:
for each accessible device, determining M capability set requests for requesting the capability sets of the home configuration page of the corresponding accessible device;
sending N capability set requests to the corresponding accessible device in parallel, and
for each capability set request having been sent, if the capability set requested by the capability set request is not received within a preset time, marking the capability set request as a failed request;
after sending the M capability set requests, extending the preset time and resending the capability set request marked as the failed request to the corresponding accessible device;
wherein the M and the N are integers greater than 0, and the M is greater than or equal to the N.

2. The method according to claim 1, wherein if the configuration page of the target device is the home configuration page, when the capability sets corresponding to the configuration page of the target device are not obtained, the method further comprises:
if the capability sets corresponding to the home configuration page of the target device are being pulled, after the capability sets corresponding to the home configuration page of the target device are pulled successfully, displaying the home configuration page according to the capability sets corresponding to the home configuration page of the target device, and caching the capability sets corresponding to the home configuration page of the target device;
otherwise, sending a request to the target device to obtain the capability sets corresponding to the home configuration page of the target device, cache the obtained capability sets, and display the corresponding home configuration page according to the obtained capability sets.

3. The method according to claim 1, wherein if the configuration page of the target device is a sub-configuration page associated with a home configuration page of the target device, when the capability sets corresponding to the configuration page of the target device are not obtained, the method further comprises:
requesting the capability sets corresponding to the sub-configuration page from the target device, caching the capability sets, and displaying the sub-configuration page according to the capability sets.

4. The method according to claim 1, wherein if the capability sets corresponding to the configuration page of the target device exist in the cached capability sets, after displaying the capability sets of the configuration page, the method further comprises:
requesting capability sets corresponding to the configuration page from the target device;
updating the cached capability sets of the configuration page according to the capability sets returned by the target device.

5. The method according to claim 1, further comprising:
when detecting a modification event for a specified configuration parameter on the configuration page of the target device, searching for a capability set request corresponding to the modified specified configuration parameter in a preset correspondence between specified configuration parameters and capability set requests;
sending the searched capability set request to the target device and receiving the capability set requested by the searched capability set request returned by the target device;
updating the locally cached capability set corresponding to the modified specified configuration parameter based on the capability set returned by the management platform.

6. An apparatus for requesting a configuration page (1300), wherein the apparatus is applied to a user terminal and comprises:
an obtaining unit (1301), adapted to, in a condition that a page display event for the configuration page of a target device is detected, obtain one or more capability sets corresponding to the configuration page of the target device from cached capability sets of at least one accessible device accessible by the user terminal;
a display unit (1302), adapted to, if the capability sets corresponding to the configuration page of the target device are obtained, display a corresponding configuration page by using the obtained capability sets;
a pull unit (1303), adapted to, before obtaining the capability sets corresponding to the configuration page of the target device from the cached capability sets of at least one accessible device accessible to the user terminal in the condition that the page display event for the configuration page of the target device is detected, obtain device information of the accessible devices from a management platform; according to the device information of the accessible devices, pull and cache the capability sets
corresponding to a home configuration page of each accessible device; the pull unit (1303) is further adapted to, when pulling the capability sets corresponding to the home configuration page of each accessible device, for each accessible device, determine M capability set requests for requesting the capability sets of the home configuration page of the corresponding accessible device and send N capability set requests in parallel to the corresponding accessible device, and for each capability set request having been sent, if the capability set requested by the capability set request is not received within a preset time, mark the capability set request as a failed request; after sending the M capability set requests, extend the preset time, and resend the capability set request marked as the failed request to the corresponding accessible device;
wherein the M and the N are integers greater than 0, and the M is greater than or equal to the N.

7. The apparatus according to claim 6, wherein the display unit (1302) is further adapted to, if the configuration page of the target device is the home configuration page, when the capability sets corresponding to the configuration page of the target device are not obtained, if the capability sets corresponding to the home configuration page of the target device are being pulled, after the capability sets corresponding to the home configuration page of the target device are pulled successfully, display the home configuration page according to the capability sets corresponding to the home configuration page of the target device, and cache the capability sets corresponding to the home configuration page of the target device; otherwise, send a request to the target device to obtain the capability sets corresponding to the home configuration page of the target device, and cache the obtained capability sets, and display the corresponding home configuration page based on the obtained capability sets.

8. The apparatus according to claim 6, wherein the display unit (1302) is further adapted to, if the configuration page of the target device is a sub-configuration page associated with a home configuration page of the target device, when the capability sets corresponding to the configuration page of the target device are not obtained, request the capability sets corresponding to the sub-configuration page from the target device, cache the capability sets, and display the sub-configuration page according to the capability sets.

9. The apparatus according to claim 6, further comprising:
an updating unit (1304), adapted to, if the capability sets corresponding to the configuration page of the target device exist in the cached capability sets, after displaying the capability sets of the configuration page, request capability sets corresponding to the configuration page from the target device: update the cached capability sets of the configuration page according to the capability sets returned by the target device;
and/or, the updating unit is further adapted to, when detecting a modification event for a specified configuration parameter on the configuration page of the target device, search for a capability set request corresponding to the modified specified configuration parameter in a preset correspondence between specified configuration parameters and capability set requests; send the searched capability set request to the target device, and receive the capability set requested for the searched capability set request returned by the target device; update the locally cached capability set corresponding to the modified specified configuration parameter based on the capability set returned by the management platform.

10. A machine-readable storage medium (1203) storing machine-readable instructions that, when executed by a processor (1202), cause the processor (1202) to perform the steps of the method according to any one of claims 1 to 5.

11. A computer program, stored on a computer-readable storage medium, when executed by a processor, causes the processor to perform the steps of the method according to any one of claims 1 to 5.

## Patentansprüche

1. Verfahren zur Anforderung einer Konfigurationsseite, wobei das Verfahren auf ein Benutzerendgerät angewendet wird und Folgendes umfasst:
Beschaffen (301) einer oder mehrerer Fähigkeitsgruppen, die der Konfigurationsseite des Zielgeräts entsprechen, aus zwischengespeicherten Fähigkeitsgruppen mindestens eines zugänglichen Geräts, auf das durch das Benutzerterminal zugegriffen werden kann, unter der Bedingung, dass ein Seitenanzeigeereignis für die Konfigurationsseite eines Zielgeräts erkannt wird;
Anzeigen (302) einer entsprechenden Konfigurationsseite unter Verwendung der beschafften Fähigkeitsgruppen, wenn die der Konfigurationsseite des Zielgeräts entsprechenden Fähigkeitsgruppen beschafft werden;
wobei das Verfahren vor dem Beschaffen der Fähigkeitsgruppen, die der Konfigurationsseite des Zielgeräts entsprechen, aus den zwischengespeicherten Fähigkeitsgruppen mindestens eines zugreifbaren Geräts, auf das durch das Benutzerterminal zugegriffen werden kann, unter der Bedingung, dass das Seitenanzeigeereignis für die Konfigurationsseite des Zielgeräts erkannt wird, ferner umfasst:
Beschaffung (401) von Geräteinformationen der zugänglichen Geräte von einer Managementplattform;
Abrufen (402) und Zwischenspeichern von Fähigkeitsgruppen, die einer Heimkonfigurationsseite jedes zugänglichen Geräts entsprechen, gemäß den Geräteinformationen der zugänglichen Geräte;
wobei das Abrufen der Fähigkeitsgruppen, die der Heimkonfigurationsseite jedes zugänglichen Geräts entsprechen, umfasst:
Bestimmung von M Fähigkeitsgruppenanforderungen zum Anfordern der Fähigkeitsgruppen der Heimkonfigurationsseite des entsprechenden zugänglichen Geräts für jedes zugängliche Gerät;
paralleles Senden von N Fähigkeitsgruppenanforderungen an die entsprechende zugängliche Vorrichtung, und
Kennzeichnung der Fähigkeitsgruppenanforderung als fehlgeschlagene Anforderung für jede gesendete Fähigkeitsgruppenanforderung, wenn der durch die Fähigkeitsgruppenanforderung angeforderte Fähigkeitsgruppe nicht innerhalb einer vorgegebenen Zeit empfangen wird;
Verlängern der voreingestellten Zeit und erneutes Senden der als fehlgeschlagene Anforderung gekennzeichnete Fähigkeitsgruppenanforderung an das entsprechende zugängliche Gerät nach dem Senden der M Fähigkeitsgruppenanforderungen;
wobei M und N ganze Zahlen sind, die größer als 0 sind, und M größer als oder gleich N ist.

2. Verfahren nach Anspruch 1, wobei wenn die Konfigurationsseite des Zielgeräts die Heimkonfigurationsseite ist, wenn die der Konfigurationsseite des Zielgeräts entsprechenden Fähigkeitsgruppen nicht beschafft werden, das Verfahren ferner umfasst:
Anzeigen der Heimkonfigurationsseite gemäß den Fähigkeitsgruppen, die der Heimkonfigurationsseite des Zielgeräts entsprechen, und Zwischenspeichern der Fähigkeitsgruppen, die der Heimkonfigurationsseite des Zielgeräts entsprechen, wenn die Fähigkeitsgruppen, die der Heimkonfigurationsseite des Zielgeräts entsprechen, abgerufen werden, nachdem die Fähigkeitsgruppen, die der Heimkonfigurationsseite des Zielgeräts entsprechen, erfolgreich abgerufen wurden;
andernfalls Senden einer Anforderung an das Zielgerät, um die Fähigkeitsgruppen zu beschaffen, die der Heimkonfigurationsseite des Zielgeräts entsprechen, Zwischenspeichern der beschafften Fähigkeitsgruppen und Anzeigen der entsprechenden Heimkonfigurationsseite gemäß den beschafften Fähigkeitsgruppen.

3. Verfahren nach Anspruch 1, wobei, wenn die Konfigurationsseite des Zielgeräts eine Unterkonfigurationsseite ist, die mit einer Heimkonfigurationsseite des Zielgeräts verbunden ist, wenn die Fähigkeitsgruppen, die der Konfigurationsseite des Zielgeräts entsprechen, nicht beschafft werden, das Verfahren ferner umfasst:
Anforderungen der Fähigkeitsgruppen, die der Unterkonfigurationsseite entsprechen, vom Zielgerät, Zwischenspeichern der Fähigkeitsgruppen und Anzeigen der Unterkonfigurationsseite gemäß den Fähigkeitsgruppen.

4. Verfahren nach Anspruch 1, wobei, wenn die der Konfigurationsseite des Zielgeräts entsprechenden Fähigkeitsgruppen in den zwischengespeicherten Fähigkeitsgruppen vorhanden sind, das Verfahren nach dem Anzeigen der Fähigkeitsgruppen der Konfigurationsseite weiterhin umfasst:
Anforderungen der der Konfigurationsseite entsprechenden Fähigkeitsgruppen vom Zielgerät;
Aktualisieren der zwischengespeicherten Fähigkeitsgruppen der Konfigurationsseite entsprechend den vom Zielgerät zurückgegebenen Fähigkeitsgruppen.

5. Das Verfahren nach Anspruch 1, ferner umfassend:
Suchen nach einer Fähigkeitsgruppenanforderung, die dem geänderten spezifizierten Konfigurationsparameter in einer voreingestellten Korrespondenz zwischen spezifizierten Konfigurationsparametern und Fähigkeitsgruppenanforderungen entspricht, wenn ein Änderungsereignis für einen spezifizierten Konfigurationsparameter auf der Konfigurationsseite des Zielgeräts erkannt wird;
Senden der Anforderung nach der gesuchten Fähigkeitsgruppe an das Zielgerät und Empfangen der Fähigkeitsgruppe, die durch die vom Zielgerät zurückgegebene Anforderung nach der gesuchten Fähigkeitsgruppe angefordert wurde;
Aktualisieren der lokal zwischengespeicherten Fähigkeitsgruppe, die dem geänderten spezifizierten Konfigurationsparameter entspricht, auf der Grundlage der von der Managementplattform zurückgegebenen Fähigkeitsgruppe.

6. Eine Vorrichtung zur Anforderung einer Konfigurationsseite (1300), wobei die Vorrichtung auf einem Benutzerendgerät angewendet wird und umfasst:
eine Beschaffungseinheit (1301), die angepasst ist, dass sie unter der Bedingung, dass ein Seitenanzeigeereignis für die Konfigurationsseite eines Zielgeräts erkannt wird, einen oder mehrere Fähigkeitsgruppen, die der Konfigurationsseite des Zielgeräts entsprechen, aus zwischengespeicherten Fähigkeitsgruppen mindestens eines zugänglichen Geräts, auf das das Benutzerterminal zugreifen kann, beschafft;
eine Anzeigeeinheit (1302), die angepasst ist, wenn die der Konfigurationsseite des Zielgeräts entsprechenden Fähigkeitsgruppen beschafft werden, eine entsprechende Konfigurationsseite unter Verwendung der beschafften Fähigkeitsgruppen anzuzeigen;
eine Abrufeinheit (1303), die angepasst ist, um vor dem Beschaffen der Fähigkeitsgruppen, die der Konfigurationsseite des Zielgeräts entsprechen, aus den zwischengespeicherten Fähigkeitsgruppen mindestens eines zugänglichen Geräts, auf das das Benutzerterminal zugreifen kann, unter der Bedingung, dass das Seitenanzeigeereignis für die Konfigurationsseite des Zielgeräts erkannt wird, Geräteinformationen der zugänglichen Geräte von einer Verwaltungsplattform zu beschaffen; gemäß den Geräteinformationen der zugänglichen Geräte die Fähigkeitsgruppen, die einer Heimkonfigurationsseite jedes zugänglichen Geräts entsprechen, abzurufen und zwischenzuspeichern;
die Abrufeinheit (1303) ist ferner angepasst, beim Abrufen der der Heimkonfigurationsseite jedes zugänglichen Geräts entsprechenden Fähigkeitsgruppen für jedes zugängliche Gerät, M Fähigkeitsgruppenanforderungen zum Anfordern der Fähigkeitsgruppen der Heimkonfigurationsseite des entsprechenden zugänglichen Geräts zu bestimmen und N Fähigkeitsgruppenanforderungen parallel an das entsprechende zugängliche Gerät zu senden, und für jede gesendete Fähigkeitsgruppenanforderung, wenn die durch die Fähigkeitsgruppenanforderung angeforderte Fähigkeitsgruppe nicht innerhalb einer voreingestellten Zeit empfangen wird, die Fähigkeitsgruppenanforderung als eine fehlgeschlagene Anforderung zu markieren; nach dem Senden der M Fähigkeitsgruppenanforderungen die voreingestellte Zeit zu verlängern und die als fehlgeschlagene Anforderung markierte Fähigkeitsgruppenanforderung erneut an das entsprechende zugängliche Gerät zu senden;
wobei M und N ganze Zahlen sind, die größer als 0 sind, und M größer als oder gleich N ist.

7. Die Vorrichtung nach Anspruch 6, wobei
die Anzeigeeinheit (1302) ferner dazu angepasst ist, wenn die Konfigurationsseite des Zielgeräts die Heimkonfigurationsseite ist, wenn die der Konfigurationsseite des Zielgeräts entsprechenden Fähigkeitsgruppen nicht beschafft werden, wenn die der Heimkonfigurationsseite des Zielgeräts entsprechenden Fähigkeitsgruppen abgerufen werden, nachdem die der Heimkonfigurationsseite des Zielgeräts entsprechenden Fähigkeitsgruppen erfolgreich abgerufen wurden, die Heimkonfigurationsseite gemäß den der Heimkonfigurationsseite des Zielgeräts entsprechenden Fähigkeitsgruppen anzuzeigen und die der Heimkonfigurationsseite des Zielgeräts entsprechenden Fähigkeitsgruppen zwischenzuspeichern; andernfalls Senden einer Anforderung an das Zielgerät, um die Fähigkeitsgruppen zu beschaffen, die der Heimkonfigurationsseite des Zielgeräts entsprechen, und Zwischenspeichern der beschafften Fähigkeitsgruppen, und Anzeigen der entsprechenden Heimkonfigurationsseite auf der Grundlage der beschafften Fähigkeitsgruppen.

8. Die Vorrichtung nach Anspruch 6, wobei
die Anzeigeeinheit (1302) ferner dazu angepasst ist, wenn die Konfigurationsseite des Zielgeräts eine Unterkonfigurationsseite ist, die mit einer Heimkonfigurationsseite des Zielgeräts verbunden ist, wenn die Fähigkeitsgruppen, die der Konfigurationsseite des Zielgeräts entsprechen, nicht beschafft werden, die Fähigkeitsgruppen, die der Unterkonfigurationsseite entsprechen, vom Zielgerät anzufordern, die Fähigkeitsgruppen zwischenzuspeichern und die Unterkonfigurationsseite gemäß den Fähigkeitsgruppen anzuzeigen.

9. Vorrichtung nach Anspruch 6, ferner umfassend:
eine Aktualisierungseinheit (1304), die angepasst ist, wenn die der Konfigurationsseite des Zielgeräts entsprechenden Fähigkeitsgruppen in den zwischengespeicherten Fähigkeitsgruppen existieren, nach dem Anzeigen der Fähigkeitsgruppen der Konfigurationsseite, Fähigkeitsgruppen, die der Konfigurationsseite entsprechen, von dem Zielgerät anzufordern; die zwischengespeicherten Fähigkeitsgruppen der Konfigurationsseite gemäß den vom Zielgerät zurückgegebenen Fähigkeitsgruppen zu aktualisieren;
und/oder, die Aktualisierungseinheit ist weiterhin angepasst, um, wenn sie ein Modifikationsereignis für einen spezifizierten Konfigurationsparameter auf der Konfigurationsseite des Zielgeräts erkennt, nach einer Fähigkeitsgruppenanforderung zu suchen, die dem modifizierten spezifizierten Konfigurationsparameter in einer voreingestellten Entsprechung zwischen spezifizierten Konfigurationsparametern und Fähigkeitsgruppenanforderungen entspricht; die gesuchte Fähigkeitsgruppenanforderung an das Zielgerät zu senden und die für die gesuchte Fähigkeitsgruppenanforderung angeforderte Fähigkeitsgruppe zu empfangen, die vom Zielgerät zurückgegeben wird; die lokal zwischengespeicherte Fähigkeitsgruppe zu aktualisieren, die dem modifizierten spezifizierten Konfigurationsparameter entspricht, basierend auf der von der Verwaltungsplattform zurückgegebenen Fähigkeitsgruppe.

10. Maschinenlesbares Speichermedium (1203), das maschinenlesbare Anweisungen speichert, die, wenn sie von einem Prozessor (1202) ausgeführt werden, den Prozessor (1202) veranlassen, die Schritte des Verfahrens nach einem der Ansprüche 1 bis 5 durchzuführen.

11. Ein Computerprogramm, das auf einem computerlesbaren Speichermedium gespeichert ist, veranlasst, wenn es von einem Prozessor ausgeführt wird, den Prozessor, die Schritte des Verfahrens nach einem der Ansprüche 1 bis 5 durchzuführen.

## Revendications

1. Procédé pour demander une page de configuration, le procédé étant appliqué à un terminal utilisateur et comprenant les étapes suivantes :
à condition qu'un événement d'affichage de page pour la page de configuration d'un dispositif cible soit détecté, obtenir (301) un ou plusieurs ensembles de capacités correspondant à la page de configuration du dispositif cible à partir des ensembles de capacités mis en cache d'au moins un dispositif accessible par le terminal utilisateur ;
si les ensembles de capacités correspondant à la page de configuration du dispositif cible sont obtenus, afficher (302) une page de configuration correspondante en utilisant les ensembles de capacités obtenus ;
où, avant d'obtenir les ensembles de capacités correspondant à la page de configuration du dispositif cible à partir des ensembles de capacités mis en cache d'au moins un dispositif accessible, accessible par le terminal utilisateur à la condition que l'événement d'affichage de page pour la page de configuration du dispositif cible soit détecté, le procédé comprend en outre les étapes suivantes :
obtenir (401) des informations de dispositif relatives aux dispositifs accessibles à partir d'une plate-forme de gestion ;
en fonction des informations de dispositif relatives aux dispositifs accessibles, extraire (402) et mettre en cache les ensembles de capacités correspondant à une page de configuration d'accueil de chaque dispositif accessible ;
où l'extraction des ensembles de capacités correspondant à la page de configuration d'accueil de chaque dispositif accessible comprend les étapes suivantes :
pour chaque dispositif accessible, déterminer M demandes d'ensembles de capacités pour demander les ensembles de capacités de la page de configuration d'accueil du dispositif accessible correspondant ;
envoyer en parallèle N demandes d'ensembles de capacités au dispositif accessible correspondant, et
pour chaque demande d'ensemble de capacités ayant été envoyée, si l'ensemble de capacités demandé par la demande d'ensemble de capacités n'est pas reçu dans un délai prédéfini, marquer la demande d'ensemble de capacités comme une demande ayant échoué ;
après avoir envoyé les M demandes d'ensemble de capacités, prolonger le délai prédéfini et renvoyer la demande d'ensemble de capacités marquée comme demande ayant échoué au dispositif accessible correspondant ;
où M et N sont des nombres entiers supérieurs à 0, et M est supérieur ou égal à N.

2. Procédé selon la revendication 1, dans lequel, si la page de configuration du dispositif cible est la page de configuration d'accueil, lorsque les ensembles de capacités correspondant à la page de configuration du dispositif cible ne sont pas obtenus, le procédé comprend en outre les étapes suivantes :
si les ensembles de capacités correspondant à la page de configuration d'accueil du dispositif cible sont en cours d'extraction, après que les ensembles de capacités correspondant à la page de configuration d'accueil du dispositif cible ont été extraits avec succès, afficher la page de configuration d'accueil en fonction des ensembles de capacités correspondant à la page de configuration d'accueil du dispositif cible, et mettre en cache les ensembles de capacités correspondant à la page de configuration d'accueil du dispositif cible ;
dans le cas contraire, envoyer une demande au dispositif cible pour obtenir les ensembles de capacités correspondant à la page de configuration d'accueil du dispositif cible, mettre en cache les ensembles de capacités obtenus et afficher la page de configuration d'accueil correspondante selon les ensembles de capacités obtenus.

3. Procédé selon la revendication 1, dans lequel, si la page de configuration du dispositif cible est une page de sous-configuration associée à une page de configuration d'accueil du dispositif cible, lorsque les ensembles de capacités correspondant à la page de configuration du dispositif cible ne sont pas obtenus, le procédé comprend en outre les étapes suivantes :
demander au dispositif cible les ensembles de capacités correspondant à la page de sous-configuration, mettre en cache les ensembles de capacités et afficher la page de sous-configuration selon les ensembles de capacités.

4. Procédé selon la revendication 1, dans lequel, si les ensembles de capacités correspondant à la page de configuration du dispositif cible existent dans les ensembles de capacités mis en cache, après avoir affiché les ensembles de capacités de la page de configuration, le procédé comprend en outre les étapes suivantes :
demander au dispositif cible des ensembles de capacités correspondant à la page de configuration ;
mettre à jour les ensembles de capacités mis en cache de la page de configuration selon les ensembles de capacités renvoyés par le dispositif cible.

5. Procédé selon la revendication 1, comprenant en outre les étapes suivantes :
lors de la détection d'un événement de modification pour un paramètre de configuration spécifié sur la page de configuration du dispositif cible, rechercher une demande d'ensemble de capacités correspondant au paramètre de configuration spécifié modifié dans une correspondance prédéfinie entre les paramètres de configuration spécifiés et les demandes d'ensemble de capacités ;
envoyer la demande d'ensemble de capacités recherchée au dispositif cible et recevoir l'ensemble de capacités demandé par la demande d'ensemble de capacités recherchée renvoyée par le dispositif cible ;
mettre à jour l'ensemble de capacités mis en cache localement correspondant au paramètre de configuration spécifié modifié sur la base de l'ensemble de capacités renvoyé par la plateforme de gestion.

6. Appareil pour demander une page de configuration (1300), l'appareil étant appliqué à un terminal utilisateur et comprenant :
une unité d'obtention (1301), adaptée pour, à condition qu'un événement d'affichage de page pour la page de configuration d'un dispositif cible soit détecté, obtenir un ou plusieurs ensembles de capacités correspondant à la page de configuration du dispositif cible à partir des ensembles de capacités mis en cache d'au moins un dispositif accessible par le terminal utilisateur ;
une unité d'affichage (1302), adaptée pour, si les ensembles de capacités correspondant à la page de configuration du dispositif cible sont obtenus, afficher une page de configuration correspondante en utilisant les ensembles de capacités obtenus ;
une unité d'extraction (1303), adaptée pour, avant d'obtenir les ensembles de capacités correspondant à la page de configuration du dispositif cible à partir des ensembles de capacités mis en cache d'au moins un dispositif accessible, accessible au terminal utilisateur à la condition que l'événement d'affichage de page pour la page de configuration du dispositif cible soit détecté, obtenir des informations de dispositif sur les dispositifs accessibles à partir d'une plate-forme de gestion ; en fonction des informations de dispositif sur les dispositifs accessibles, extraire et mettre en cache les ensembles de capacités correspondant à une page de configuration d'accueil de chaque dispositif accessible ;
l'unité d'extraction (1303) est en outre adaptée pour, lors de l'extraction des ensembles de capacités correspondant à la page de configuration d'accueil de chaque dispositif accessible, pour chaque dispositif accessible, déterminer M demandes d'ensembles de capacités pour demander les ensembles de capacités de la page de configuration d'accueil du dispositif accessible correspondant et envoyer N demandes d'ensembles de capacités en parallèle au dispositif accessible correspondant et, pour chaque demande d'ensemble de capacités ayant été envoyée, si l'ensemble de capacités demandé par la demande d'ensemble de capacités n'est pas reçu dans un délai prédéfini, marquer la demande d'ensemble de capacités comme une demande ayant échoué ; et, après avoir envoyé les M demandes d'ensemble de capacités, prolonger le délai prédéfini et renvoyer la demande d'ensemble de capacités marquée comme demande ayant échoué au dispositif accessible correspondant ;
où M et N sont des nombres entiers supérieurs à 0, et M est supérieur ou égal à N.

7. Appareil selon la revendication 6, dans lequel :
l'unité d'affichage (1302) est en outre adaptée pour, si la page de configuration du dispositif cible est la page de configuration d'accueil, lorsque les ensembles de capacités correspondant à la page de configuration du dispositif cible ne sont pas obtenus, si les ensembles de capacités correspondant à la page de configuration d'accueil du dispositif cible sont extraits, après que les ensembles de capacités correspondant à la page de configuration d'accueil du dispositif cible ont été extraits avec succès, afficher la page de configuration d'accueil selon les ensembles de capacités correspondant à la page de configuration d'accueil du dispositif cible, et mettre en cache les ensembles de capacités correspondant à la page de configuration d'accueil du dispositif cible ; dans le cas contraire, envoyer une demande au dispositif cible pour obtenir les ensembles de capacités correspondant à la page de configuration d'accueil du dispositif cible, mettre en cache les ensembles de capacités obtenus et afficher la page de configuration d'accueil correspondante sur la base des ensembles de capacités obtenus.

8. Appareil selon la revendication 6, dans lequel :
l'unité d'affichage (1302) est en outre adaptée pour, si la page de configuration du dispositif cible est une page de sous-configuration associée à une page de configuration d'accueil du dispositif cible, lorsque les ensembles de capacités correspondant à la page de configuration du dispositif cible ne sont pas obtenus, demander les ensembles de capacités correspondant à la page de sous-configuration au dispositif cible, mettre en cache les ensembles de capacités, et afficher la page de sous-configuration selon les ensembles de capacités.

9. Appareil selon la revendication 6, comprenant en outre :
une unité de mise à jour (1304), adaptée pour, si les ensembles de capacités correspondant à la page de configuration du dispositif cible existent dans les ensembles de capacités mis en cache, après avoir affiché les ensembles de capacités de la page de configuration, demander au dispositif cible des ensembles de capacités correspondant à la page de configuration ; mettre à jour les ensembles de capacités mis en cache de la page de configuration selon les ensembles de capacités renvoyés par le dispositif cible ;
et/ou l'unité de mise à jour est en outre adaptée pour, lors de la détection d'un événement de modification pour un paramètre de configuration spécifié sur la page de configuration du dispositif cible, rechercher une demande d'ensemble de capacités correspondant au paramètre de configuration spécifié modifié dans une correspondance prédéfinie entre les paramètres de configuration spécifiés et les demandes d'ensemble de capacités ; envoyer la demande d'ensemble de capacités recherchée au dispositif cible, et recevoir l'ensemble de capacités demandé pour la demande d'ensemble de capacités recherchée renvoyée par le dispositif cible ; mettre à jour l'ensemble de capacités mis en cache localement correspondant au paramètre de configuration spécifié modifié sur la base de l'ensemble de capacités renvoyé par la plateforme de gestion.

10. Support de stockage lisible par machine (1203) stockant des instructions lisibles par machine qui, lorsqu'elles sont exécutées par un processeur (1202), amènent le processeur (1202) à exécuter les étapes du procédé selon l'une quelconque des revendications 1 à 5.

11. Programme informatique, stocké sur un support de stockage lisible par ordinateur, qui, lorsqu'il est exécuté par un processeur, amène le processeur à exécuter les étapes du procédé selon l'une quelconque des revendications 1 à 5.
